# EUROPÄISCHE PATENTSCHRIFT

(11) **EP 1 116 310 B1**
(45) Veröffentlichungstag und Bekanntmachung des Hinweises auf die Patenterteilung: **19.10.2005**
(21) Anmeldenummer: 99939577.5
(22) Anmeldetag: 07.09.1999
(51) Int. Cl.: H02G 1/12

(54) **VORRICHTUNG ZUM ABISOLIEREN VON DRÄHTEN UND KABELN**
DEVICE FOR STRIPPING WIRES OR CABLES
DISPOSITIF PERMETTANT DE DENUDER DES FILS OU DES CABLES

(30) Priorität: 22.09.1998 CH 200498
(43) Veröffentlichungstag der Anmeldung: 18.07.2001
(73) Patentinhaber: Schleuniger Holding AG, 3608 Thun (CH)
(72) Erfinder: STEPAN, Jiri, CH-7320 Sargans (CH)
(74) Vertreter: Rosenich, Paul
(86) Internationale Anmeldenummer: PCT/IB1999/001515
(87) Internationale Veröffentlichungsnummer: WO 2000/017976

(56) Entgegenhaltungen:
- EP-A- 0 352 038
- US-A- 5 140 873

## Beschreibung

Die vorliegende Erfindung betrifft eine Vorrichtung zum maschinellen Abisolieren von elektrischen und lichtoptischen ein- oder mehradrigen Leitern bzw. Drähten und Kabeln. Die Vorrichtung umfasst: Eine Einführöffnung für den Leiter bzw. für ein Leiterende, eine Spannvorrichtung mit wenigstens einem Spannbacken und wenigstens ein Messer zum Durchtrennen einer Isolation sowie einen Antrieb für das radiale Einschneiden und axiale Abziehen des Messers.

Es wurden Abisoliervorrichtungen angeboten, welche für die Spannbacken und Messerbetätigung je einen pneumatischen Betätigungszylinder einsetzen. Diese sind platzsperrend, was sich z.B. beim Bearbeiten von komplizierten Kabelbäumen störend auswirkt.

Eine frühe Weiterentwicklung umfasste ebenso zwei Zylinder. Der eine Zylinder diente dem Antrieb der Spannbacken und dem Axialantrieb der Messer für die Abzugsbewegung. Der zweite Antrieb diente dem Messerschliessen. Er fährt auf einem Abzugsschlitten mit. Diese Entwicklung wurde von einer Vorgängerin der Anmelderin unter der Bezeichnung AM 2 auf den Markt gebracht. Bei diesem Aufbau sorgte ein ausgeklügelter Mechanismus dafür, dass bei Erhöhung der Abzugskraft die Spannkraft an den Spannbacken selbsttätig gesteigert wurde.

Eine gegenüber dem oben beschriebenen Stand der Technik weiter verbesserte Abisoliervorrichtung wurde von der Anmelderin schon 1982 konzipiert und ab 1986 produziert und unter der Bezeichnung US 2015 auf den Markt gebracht. Eine durch die Anmelderin weitergeführte Weiterentwicklung der US 2015 sind die US 2500 und die US 2045.

Diese maschinellen, pneumatischen Abisoliervorrichtungen bilden heute weltweit den akzeptierten Stand der Technik für kleine leichte Abisoliervorrichtungen mit nichtrotierenden Messern.

Sie haben eine hohe Abisolierkraft und Taktgeschwindigkeit, sind klein und handlich. Sie vermeiden zudem mittels Luftausblasung und Zurückziehen eines Leiteranschlages das Verklemmen von Abisolationsresten.

Sie verfügen über einen einzigen fliegenden Pneumatikzylinder, der sowohl als Antrieb für die Messer als auch als Antrieb für die Spannbacken dient. Der Abzugsachse (bzw.-Ebene), in der unmittelbar die Abzugskräfte wirken, (das ist parallel und in Abhängigkeit vom Aufbau und von der Anordnung der Messerhalter parallel zur (US 2015) und manchmal praktisch in der Kabelachse (US 2500)) ist parallel eine Steuerachse (bzw. -Ebene, bzw. Steuermechanismus) zur Seite gestellt, um die (bzw. in der, bzw. in dem) eine Steuerstange angeordnet ist, die Steuerelemente für das Ansteuern der Spannbacken und Messerbacken trägt. Die Antriebsachse für das Aufbringen der Abzugs- und Steuerkräfte (das ist praktisch die Achse des Pneumatikzylinders) liegt in der Steuerachse. Deshalb ergibt sich eine bestimmte Baulänge, da sowohl Antriebsals auch Steuerelemente entlang dieser Antriebsachse angeordnet sind. Da die Antriebsachse und die Abzugsachse parallel, aber nicht ineinander liegen, kommt es - in Abhängigkeit von den Abzugskräften - zu Kippmomenten, die durch die Lagerung aufgenommen werden müssen. Das Aufnehmen dieser Kippmomente ist jedoch mit einem Antriebsenergieverlust verbunden.

Ein Längeneinstellanschlag für den Leiter wird beim Isolationsabziehen zurückgezogen, so dass es nicht zum Verklemmen kommen kann.

Nachteiligerweise benötigen alle diese bekannten Vorrichtungen zum Betrieb jedoch ein pneumatisches Fluid und entsprechende Fluidzuführeinrichtungen. Z.B. im Bereich der Heimarbeit sowie an Baustellen ergeben sich daraus Probleme (Kompressor für Arbeitsfluid).

Weltweit bemühte man sich daraufhin, den Aufbau einer US 2015 oder einer vergleichbaren Vorrichtung so zu verändern, dass auf ein pneumatisches Fluid verzichtet werden kann. Elektrische Antriebe wurden eingesetzt.:

Die Al 01 der Firma Zollern + Fröhlich verwendet als Antriebsprinzip einen Elektromotor, der für das Einspannen, Einschneiden und Abziehen der Isolation verschiedene Nockenscheiben antreibt. Abgesehen von einem voluminösen Aufbau und aufwendigen Kraftübertragungen, ist bei dieser Maschine der Abisolierzyklus, gemessen an einer US 2015, zu langsam. Das US-Patent 4327609 beschreibt auch ein Ausführungsbeispiel mit einem Elektromotor und Nockenscheiben.

Die W-2020 von Yoshiki verfügt ebenso über einen elektrischen Antriebsmotor und verschiedene querliegende Antriebselemente, die den Aufbau, gemessen an einer US 2500 allerdings zu voluminös gestalten.

Ein jüngerer,Aufbau der Firma Cosmic KK, der in der JP-10-112913 A beschrieben ist, entspricht im mechanischen Teil dem mechanischen Aufbau der US 2015, wobei der pneumatische Zylinder durch einen seitlich liegenden Elektromotor mit Spindelantrieb und Getriebe ersetzt wurde. Der oben angegebenen Nachteil auftretender Kippmomente zwischen Antriebsachse und Abzugsachse wurde nicht vermieden, da die Antriebsachse auch hier in der Steuerachse liegt. Sie baut zudem wesentlich grösser als die US 2015, der Abisolierzyklus ist jedoch aufgrund mangelnder Dynamik deutlich langsamer. Ein seitlich liegender Elektromotor treibt über ein Zahnriemengetriebe und eine Keilwelle eine axial schwimmende Spindel mit einer Kugelumlaufmutter. Koaxial zur Spindel sind zwei Konusflächen als Steuerflächen für eine Spannvorrichtung und für einen Messerantrieb analog zur US 2015 vorgesehen, die somit wie von einer Kolbenstange mit Kegeln angetrieben werden.

Abgesehen von mangelnder Kompaktheit und langsamen AbisoLierzyklus hat dieser bekannte Aufbau somit weiters den Nachteil, relativ grosser, aufwendiger Steuerflächen, die - infolge Ineinanderliegen von Antriebs- und Steuerachse in sich die Spindel aufnehmen und an ihr gelagert sein müssen, was bei Rotation der Spindel zu zusätzlichen Reibungsverlusten führen kann. Da die um die Abzugsachse angeordnete Abzugsanordnung (Messer, Messerbacken, Schubrohre), die durch die Spindel axial verschiebbar ist, hohe axiale Kräfte erzeugt, kommt es infolge des relativ grossen Abstandes zwischen der Abzugsachse und der Achse der Spindel zu den oben angegebenen relativ grossen Kippmomenten und daher zu weiteren Kraft- bzw. Reibungsverlusten. Weitere Verluste an axialer Schubkraft entstehen durch Reibung in der Keilwellen-Kupplung.

Das Dokument EP-A-0352038 beschreibt eine Vorrichtung zum Abisolieren von Leitern entlang einer Abzugsachse mit wenigstens je einem Einschneide-, Abzugs- und Steuermechanismus mit wenigstens einem Steuerelement an dem Steuermechanismus. Diese bekannte Vorrichtung ist so gestaltet, dass der Steuermechanismus von der Antriebsachse getrennt ist, und dass die Antriebsachse parallel der Abzugsachse liegt. Dieser Aufbau bedarf jedoch für jede Achse einen eigenen Antrieb, so dass er gross und voluminös baut und zur Koordination der Motoren über eine geeignete Elektronik verfügen muss.

Der vorliegenden Erfindung liegt somit als eine der Aufgaben zugrunde, eine verbesserte Abisoliervorrichtung zu schaffen, deren Baulänge verkürzt ist gegenüber einer theoretischen Baulänge bei Aufbauten mit integrierter Antriebs- und Steuerachse. In einem weiteren Schritt sollte deren Antriebsenergie optimal genützt und somit oben erwähnte Verluste weiterstgehend vermieden werden. Trotzdem soll sie möglichst so kompakt wie eine US 2015 oder eine US 2500 gebaut sein.

In einem davon an sich unabhängigen Entwicklungsschritt soll der pneumatische Antrieb, wie an sich bekannt, rotativ, insbesondere mittels elektrischer Energie antreibbar sein und die diesbezüglich angeführten Nachteile vermieden werden.

Der Aufbau soll wie bei den angegebenen US- Maschinen mit einem einzigen Antriebsmotor auskommen.

Diese Aufgabe wird durch die Merkmale des Anspruchs 1 gelöst.

Erfindungsgemäss wird der Steuermechanismus von der Antriebsachse getrennt angeordnet. In diesem Fall kann überraschenderweise Baulänge reduziert werden, indem eine Integration aufgehoben wird. Die Trennung von Antriebs- und Steuerachse bewirkt auch eine Baulängenverkürzung, da entlang der Steuerachse lediglich Steuerelemente, jedoch keine Kupplungen o.dgl. für die Antriebswelle (Kolbenstange, Spindel, o.dgl.) vorgesehen sein müssen.

Der Steuermechanismus umfasst im Sinne einer bevorzugten Ausbildungsform der Erfindung gegebenenfalls auch eine Bremse, die bei der Steuerung hilft und demgemäss auch Kippmomente erzeugen kann. Bevorzugt sind dabei die Abstände zwischen Antriebsachse und Abzugsachse bzw. zwischen Antriebsachse und Steuerachse so gewählt, dass sich allfällige Kippmomente zwischen diesen Achsen symmetrisch - jedoch mit entgegengesetzter Momentrichtung - um die Antriebsachse aufbauen, so dass sich diese Kippmomente gegenseitig verringern und die entsprechenden Belastungen der Lager reduziert werden. Dies führt zu einem Einsparen an Antriebsenergie; d.h. bei gleicher Antriebsenergie können grössere Abzugskräfte aufgebracht werden. D. h. jedoch weiters, dass die Abisoliervorrichtung insgesamt kleiner gebaut sein kann, was vielerorts eine Forderung der Anwender ist.

Die in dieser Anmeldung angegebenen "Achsen" sind nicht unbedingt Achsen im maschinenbaulichen Sinn. Sie entsprechen eher mathematischen oder räumlichen Achsen bzw. Richtungen, oder auch Ebenen. Sie müssen nicht zwingend absolut linear und absolut parallel sein. Vielmehr geht es um ungefähre Beziehungen zueinander, die - dem Fachmann verständlich - die erfindungsgemässe Lehre hinsichtlich Bauartverkürzung und Drehmomentenausgleich angeben. Die in der nachfolgenden Beschreibung dargestellten Ausführungsbeispiele weisen als weitere Achse noch eine Kabelachse, bzw. eine Ebene, in der das Kabel liegt, auf. Diese Achse oder Ebene kann im Rahmen der Erfindung von der Abzugsachse bzw. -ebene getrennt sein, oder auch in ihr liegen, wie z.B. im bekannten Modell US 2500.

Da die Abzugskräfte in der Regel grösser sind, als die Steuerkräfte für das Spannen und/oder Einschneiden eines Kabels, wird die Antriebsachse grundsätzlich bevorzugt in die Nähe der Abzugsachse gelegt werden.

Dieser Effekt ist unabhängig von der Wahl des Antriebsmotors. Anstelle eines Pneumatikzylinders könnten elektrische Linearmotore oder Rotationsmotoren mit Spindeln zum Einsatz kommen.

In einem davon unabhängigen, jedoch bevorzugten Schritt wird der bekannte Pneumatikzylinder durch einen Rotationsmotor, bevorzugt durch einen Elektromotor, ersetzt, dessen Abtriebswelle über eine Kupplung oder über einen Kraftumsetzer mit einer Gewindespindel verbunden ist, die ihrerseits Steuerflächen sowohl für den Spannbacken als auch für das Messer bewegt, wobei zwischen wenigstens einem der angetriebenen Bauteile und dem Motor eine Kupplung angeordnet ist. Dieses war bisher bei Abisoliermaschinen mit Elektromotor unbekannt.

Eine alternative Ausbildung mit einer axial verschiebbaren Lagerung des Motors und einer damit axial starr verbundenen Spindelvorrichtung hat den Vorteil, sogar noch kürzer gebaut werden zu können, was für tragbare Geräte ein Vorteil sein könnte.

Bekannte elektrisch betätigbare Abisoliervorrichtungen, wie z.B. die HC 207 (1985) der Anmelderin (vgl. US-A-4765828 benötigten für das Betätigen der Messer und der Spannvorrichtung separate Antriebe. Die Spannvorrichtung wurde dort durch einen Zugmagnet betätigt, während Messer- und Zentrierbacken über eine Spindel mit konischen Steuerflächen angetrieben wurden. Ein weiterer Antrieb rotiert die Messer zudem um die Kabelachse. Mehrere Antriebe vergrössern einerseits das Bauvolumen und andererseits den Steuerungsaufwand.

Eine Kupplung und/oder ein entsprechender Kraftumsetzer bzw. die axiale Freistellung des Motors erlaubt jedoch das Freilaufen der gegebenenfalls betroffenen Steuerflächen, um verschiedene Abisolierschritte bzw. -Bewegungen wie Spannbacken- und Messerschliessen und insbesondere das axiale Abziehen nach einander durchführen zu können. Als einfachste Kupplung dient eine Keilwelle an der Motorabtriebswelle mit Kupplungsrohr an der Spindel oder umgekehrt. Eine Alternative dazu wäre, einen Schlitten vorzusehen, der den Motor neben der Spindel und der Keilwelle trägt, so dass sich die Spindel mit dem Motor jedenfalls axial gegenüber dem Gehäuse verschieben kann. In beiden Fällen sind die Spindel und die Steuerflächen axial und relativ zum Gehäuse verschiebbar.

Eine bevorzugte Weiterbildung sieht eine lastabhängige Steuerung der Kupplung vor. Eine solche selbsttätige Steuerung ist - gegebenenfalls mehrteilig - beispielsweise - und wie an sich bekannt -mittels Feder und/oder Bremse realisiert.

Dabei umfasst die Kupplung gemäss einer bevorzugten Ausgestaltung eine Gewindemutter, insbesondere aus Reibungsreduktionsgründen eine Kugelumlaufmutter, die von der Gewindespindel angetrieben wird. Bei Ausführungen mit einer durchgehenden Spindel sind bevorzugt alle darauf laufenden Muttern als Kugelumlaufmuttern ausgeführt.

Die Spindelvorrichtungen umfassen im Rahmen der Erfindung verschiedene Gruppen von Spindeln:
A) mit Kupplung zum Motor:
   Eine Spindel mit einem durchgängigen Gewinde, wie an sich bekannt. Sie ist im Falle einer erfindungsgemässen Aufteilung der Antriebs und Steuerachsen vorteilhaft gegenüber dem Stand der Technik.
   Eine Spindel mit zwei Gewindeabschnitten (Haupt-Nebengewindeabschnitt) mit unterschiedlichen Gewindesteigungen erlaubt das kräfte-/geschwindigkeits-aufgeteilte Ansteuern der Spannbacken und Abisoliermesser und ersetzt zudem ein Getriebe.
B) Wie A), Spindel jedoch mit dem Motor starr verbunden, dafür der Motor axial zum Chassis verschiebbar, woraus sich eine weiter verkürzte Bauweise ergibt.
C) Spindel mit dem Motor über eine Spindelmutter verbunden:
   Eine Spindel mit zwei getrennten Gewindeabschnitten mit gegenläufiger Gewinderichtung mit gleicher Gewindesteigung führt zu einem vorteilhaften Antreiben der gesteuerten Bauteile,
   wobei bei unterschiedlichen Gewindesteigungen zusätzlich eine besonders gute Ausnützung der Antriebsenergie ermöglicht wird.
D) eine Hauptspindel mit dem Motor starr verbunden:
   Eine Nebenspindel, die über eine Spindelmutter mit der Hauptspindel verbunden ist, optimiert die Vorteile des letzteren Aufbaus insofern, als das geringere Trägheitsmoment einer Gewindespindel in einer Spindelmutter weitere Vorteile in der Dynamik bringt.

Alle Variationen mit Ausnahme der ersten unter A) sind für sich alleine genommen in der Anwendung für Abisolierantriebe neu und erfinderisch.

Eine somit besondere Abisoliervorrichtung mit wenigstens einem Spannbacken und wenigstens einem Abisoliermesser und mit einem elektrischen Antrieb über eine zweiteilige Gewindespindel ist in Anspruch 7 angegeben. Sie kann ebenso wie die übrigen Vorrichtungen der Ansprüche 3-8 auch unabhängig von den vorgängigen Ansprüchen 1 und 2 eingesetzt werden.

Als besonderer Vorteil eines Aufbaus nach Anspruch 7, übernimmt dieser die automatische Anpassung der Spannkraft im gesamten Abisolierbereich, wie die oben genannten pneumatischen Vorrichtungen. Er weist zudem den Vorteil auf, bei entsprechender Steigungsauslegung eine unterschiedliche Steigung und damit unterschiedliche Kräfte und Geschwindigkeiten für die unterschiedlichen Arbeitsschritte zu ermöglichen, wie in Anspruch 5 angegeben ist.

Anspruch 8 bezieht sich auf eine bevorzugte Lösung, bei der die Spindel in eine Haupt- und Nebenspindel zweigeteilt ist, wobei die beiden Teile über eine Spindelmutter miteinander verbunden sind. Dies tritt an die Stelle einer mit dem Antrieb verbundenen Keilwelle, die an sich auch unerwünschte Reibungsverluste erzielt. Durch die Spindelmutter-Anordnung ergeben sich besonders günstige Bewegungsabläufe: Beim Anfahren ergibt sich unmittelbar ein axialer Schub auf die Spindelmutter, der somit eine axiale Schubkraft ausübt, so dass die erforderliche Bremskraft für den Bewegungsablauf reduziert sein kann.

Gemäss einer besonderen Ausgestaltung der Erfindung ist der Motor als eisenloser Gleichstrommotor ausgebildet. Dies beschleunigt die Dynamik und die schnelle Drehzahlumkehr, die im Zuge eines Arbeitszyklus auftritt.

Ein besonders weitergebildeter Aufbau mit einem Auswerfer gemäss Anspruch 11 hat dabei ausserdem den Vorteil, aktiv Isolationsreste auszuwerfen. Dabei wird er nur wenig auf Biegung belastet, was seine Lebensdauer erhöht. Bevorzugt verläuft das dem Messer abgewandte Ende des Auswerfers wenigstens teilweise konzentrisch um die jeweils dem jeweiligen Messerbacken zugeordnete Drehwelle. Anspruch 12 gibt eine bevorzugte Weiterbildung der Auswerfer an.

Eine bevorzugte Vorrichtung setzt einen Gleichstrommotor ein, dessen Drehrichtungsumkehr durch elektrische Positionssensoren getriggert ist. Bevorzugt fluchten die Abtriebswelle und die Spindel, weil dadurch die Baubreite der Abisoliervorrichtung minimiert ist. Eine elektronische Steuerung kann unter- oder oberhalb des Motors angeordnet werden, ohne die Baubreite zu erhöhen. Gemäss einer besonderen Ausgestaltung der Elektronik kann diese - wie bei Endloskabelverarbeitungsmaschinen (z.B. CS 9100 der Anmelderin) an sich bekannt - automatisch nach einem Programm ablaufen, um nacheinander verschiedene Kabeldimensionen abzuisolieren. Für einen solchen Aufbau würden auch allfällige Dimensionseinstellmöglichkeiten automatisiert.

Die erfindungsgemässe Vorrichtung eignet sich somit auch für ein tragbares Handgerät, das insbesondere auch bei der Kabelbaumverarbeitung optimal einsetzbar ist.

Neben den bevorzugten Elektromotoren sind auch fluidisch antreibbare Rotationsmotoren oder andere Rotationsantriebe alternativ einsetzbar.

Anhand eines Ausführungsbeispieles soll die Erfindung beispielhaft näher erläutert werden. Integrierender Bestandteil dieser Beschreibung sind neben der Bezugszeichenliste auch die technisch beschreibenden Teile der Patentansprüche.

Es zeigen dabei:
Fig.1 eine bevorzugte erfindungsgemässe
Fig.2 eine Vorrichtung, bei der nur der Antrieb der Spannbacken dargestellt ist;
Fig.3-4 ein Detail einer erfindungsgemässen Messerhalterung mit Federauswerfern;
Fig.5a-5c Aufbauvarianten mit unterschiedlichen Spindelausführungen;
Fig.6 einen Schnitt durch einen Aufbau mit bevorzugter Messer-Ansteuerfläche und
Fig.7 eine Draufsicht auf die Ansteuerfläche.

Die Figuren werden zusammenhängend und übergreifend beschrieben. Gleiche Teile tragen gleiche Bezugszeichen, funktionsähnliche Teile gleiche Bezugszeichen mit unterschiedlichen Indizes.

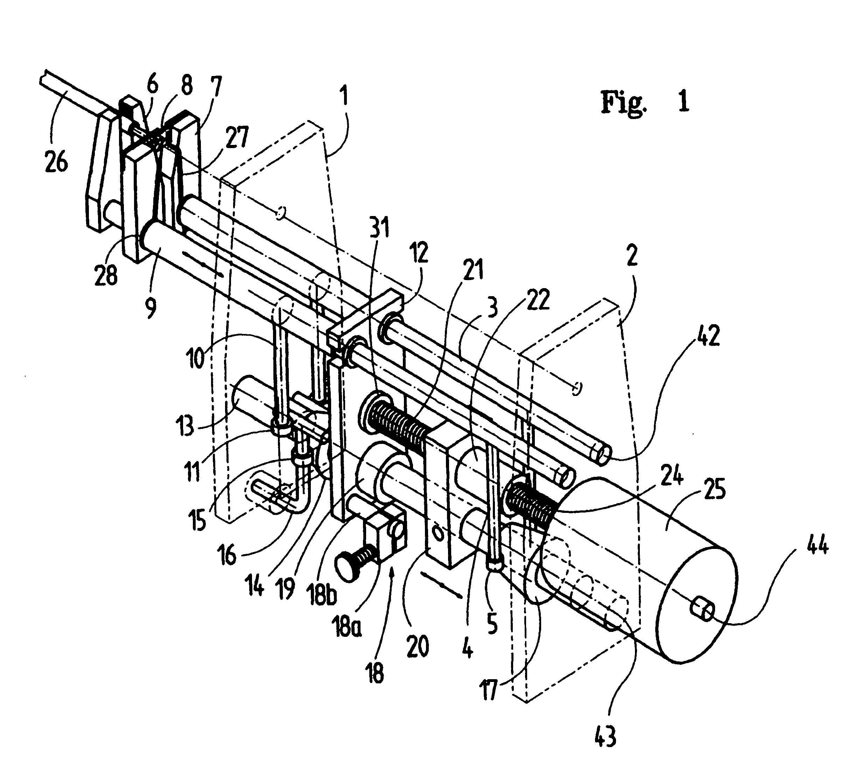

Die Vorrichtung nach Fig.1 umfasst einen Motor 25 (bevorzugt eisenloser Gleichstrommotor) mit einer Nebenspindel 24 mit Steilgewinde, die mit einer Spindelmutter 22 eine Verbindung zum Antrieb der Hauptspindel 21 bildet. Die Spindelmutter 22 ist mit der Hauptspindel 21 starr verbunden und auf der Nebenspindel 24 schraubbar. Sie ist in einer Schubplatte 20 drehbar jedoch axial fest gelagert.

Mit den weiteren Elementen wird im Folgenden gleich der Funktionsablauf beschrieben:

In der Ausgangslage sind Spannbacken 6 und Messerhalter 7 in der Regel geöffnet und nebeneinander liegend (im Bild links oben).

Nach dem Startimpuls beginnt der Motor die Nebenspindel 24 zu beschleunigen. Da diese so wie der eisenlose Motor ein geringes Trägheitsmoment hat, erfolgt dies zunächst fast widerstandslos. Bedingt durch das Steilgewinde und die Trägheit der Mutter 22 und Spindel 21 entsteht eine axiale Kraft auf die Spindelmutter 22, welche über die Schubplatte 20 auf eine Kegelwelle 13 übertragen wird, da diese axial fest mit der Schubplatte 20 verbunden ist. Gleichzeitig versucht die Hauptspindel 21 über ihr entgegengesetzt geneigtes Gewinde eine Schubplatte 12, in der sie über Innengewinde (bevorzugt eine Kugelumlaufmutter) drehbar gehalten ist, nach hinten zu ziehen. Die Schubplatte 12 ist jedoch über eine Bremse 18 gehäusefest gehalten, so dass sie zunächst in axialer Ruhe verharrt.

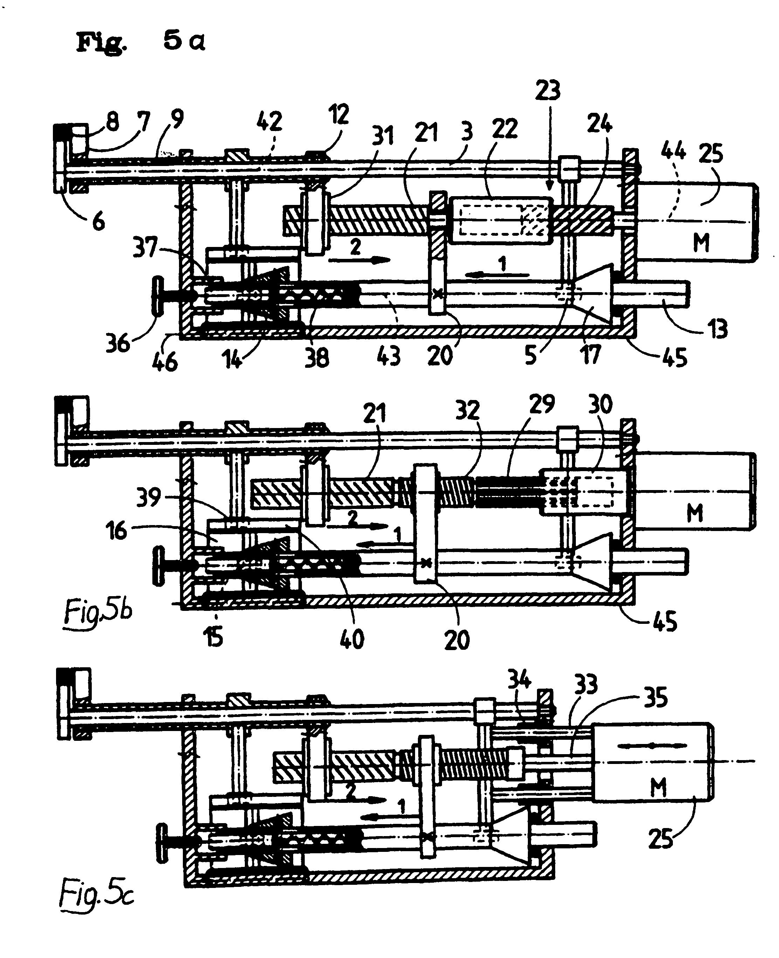

Ein Messerkegel 14 ist an der Welle 13 über eine Druckfeder 38 (Fig.5) gelagert und spreizt über T-Hebel 16 Spreizachsen 10 und verschwenkt dadurch Schubhülsen 9, die Messerbacken 7 tragen.

Die T-Hebel 16 bewirken dabei vorteilhaft, dass die Spreizung immer gleich erfolgt, unabhängig von einer axialen Relativposition der Schubhülsen 9, die durch eine Stellschraube 36 über einen Kegelschubstift 37 (Fig.5a) voreinstellbar ist. Reibungsmindernde Kopierrollen 11 und 15 übertragen die Spreizbewegung.

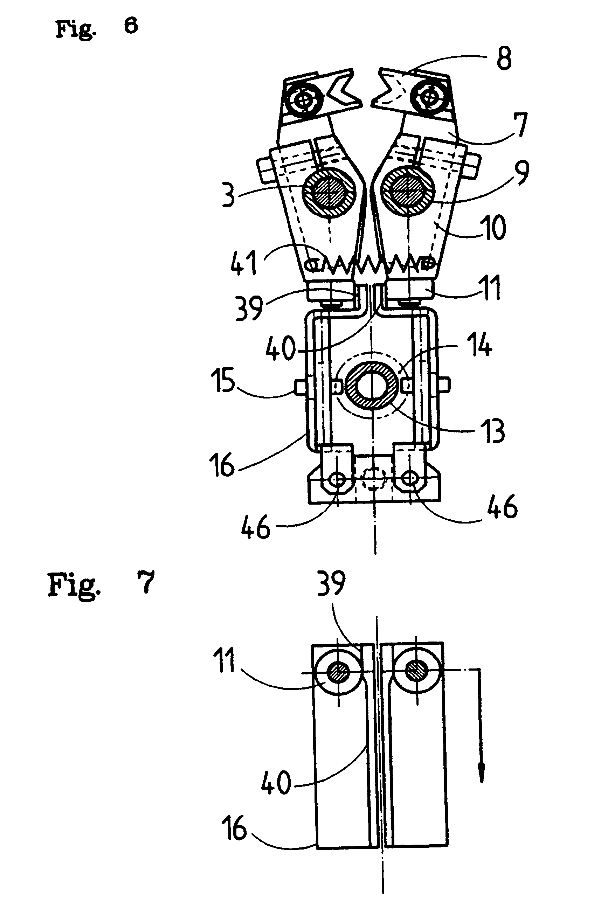

Gemäss einer besonderen Ausgestaltung der Erfindung, die auch bei Maschinen aus dem Stand der Technik unabhängig einsetzbar wäre, sind die Rollbahnen für die Kopierrollen 11 an den T-Hebeln 16 mit Abstufungen versehen, so dass sich erste und zweite Bahnabschnitte (39,40) ergeben (Fig.6,7). Die ersten Bahnabschnitte 39 beabstanden die Kopierrollen 11 mehr als die zweiten Bahnabschnitte 40. Demzufolge spreizen die ersten Bahnabschnitte 39 die Spreizhebel 10 mehr, als die zweiten Bahnabschnitte 40. Die Messer 8 schneiden tiefer ein. In der Position der zweiten Bahnabschnitte 40 werden die Messer 8 somit wieder etwas auseinander gezogen, was einem "Wayback" oder "Stepback" entspricht und - wie an sich bekannt - einem Schutz des abzuisolierenden Leiters entspricht. Der "Wayback" tritt nach kurzem Abisolierstück inkraft, somit nach dem bereits sicher erfolgten Durchtrennen des abzuisolierenden Isolationsstückes.

Die Tiefe des Einschnittes ist durch die Stellschraube 36 begrenzt. Der durch eine Feder 38 angetriebene Messerkegel 14 wird dabei durch die Stellschraube 36 gestoppt. Dadurch ist der Durchmesser bestimmt und die Feder komprimiert gegebenenfalls weiter, wodurch der Spannkegel 17 über die Teile 3,4,5 die Spannbacken 6 weiter schliesst.

Die Grösse des "Waybacks" ist definiert durch den Dimensionsunterschied zwischen den beiden Bahnabschnitten 39 und 40. Dieser kann gegebenenfalls auch keilförmig verlaufend oder mehrstufig sein.

Gleichzeitig zum Einschneiden schliessen Spannbacken 6, die an Drehwellen 3 gehalten sind. Die Drehwellen 3 werden dazu durch Spannkegel 17 über Spreizachsen 4 angetrieben. Dabei gibt es bei diesem bevorzugten Ausführungsbeispiel einen Unterschied zum Messerkegel 14, indem der Spannkegel 17 axialstarr mit der Kegelwelle 13 verbunden ist. Alternativ könnte auch er über eine vorgespannte - gegebenenfalls einstellbare - Druckfeder betätigbar sein. Dies würde eine gewisse Elastizität im Spannbereich der Spannbacken 6 erlauben.

Eine automatische Anpassung der Spannkraft der Spannbacken 6 in Abhängigkeit von den Abzugskräften an der Schubplatte 12 ergibt sich wie folgt: Spindel 21 zieht die Platten 12 und 20 relativ zueinander. Dadurch wird die Kegelwelle 13 und damit der Spannkegel 17 zwischen die Rollen 5 und Spreizachsen 4 gedrückt. Je grösser die Zugkraft an der Spindel 21, umso grösser der Druck am Kegel 17.

Der Vorschub wird dabei unterstützt durch das Eindrehen der Hauptspindel 21 in die festgehaltene Schubplatte 12. Als besonderer erfindungsgemässer Effekt ergeben sich bei dieser Ausführung somit hohe Anfahr- bzw. Beschleunigungskräfte. Dieser Effekt wird dann anschliessend auch beim Drehen des Motors in Gegenrichtung erreicht, bei dem die Abläufe in umgekehrter Richtung ablaufen.

Sobald die Spannbacken 6 an einem Leiter 26 radial anliegen, steigen die axialen Kräfte an der Drehwelle 3. Nach Erreichen einer durch Einstellen der Bremsbacken 18a definierten Bremskraft, wird diese überwunden. Jetzt wird mit dem Abzug der Isolation begonnen, indem die Hauptspindel 21 die Schubplatte 12 und damit die Messerhalter 7 unter Überwindung der Bremskraft nach hinten zieht. Da die Hauptspindel 21 mit einer relativ flachen Gewindesteigung ausgerüstet ist, gibt es hier kräftemässig keine Probleme.

Das Steilgewinde an der Nebenspindel 24 bewirkt eine besonders günstige Kräfteübertragung in axialer Richtung der Platte 20 und damit auf die Kegelwelle 13. Um wenigstens diese Kräftekomponente ist - gegenüber dem Bekannten - die Bremskraft der Bremse 18 reduziert. Auch daraus folgt, dass in hohem Mass mit kleineren Trägheitsmomenten gleiche Abisolierleistungen bewirkt werden können, was sich auch auf die Arbeitsgeschwindigkeit und die Maschinengrösse bzw. -dynamik positiv auswirkt.
Versuche zeigen, dass dieser Aufbau bei gleicher Antriebsleistung gegenüber einem Aufbau mit nur einer einfachen Antriebsspindel bis zu etwa doppelten Abisolier-Geschwindigkeiten erreichen kann.

Durch die Kombination der unterschiedlichen Gewindesteigungen und den direkten Antrieb der Spindel durch die Motorabtriebswelle ergibt sich zudem ein positives Untersetzungsverhalten, so dass zusätzliche Getriebe entfallen können.

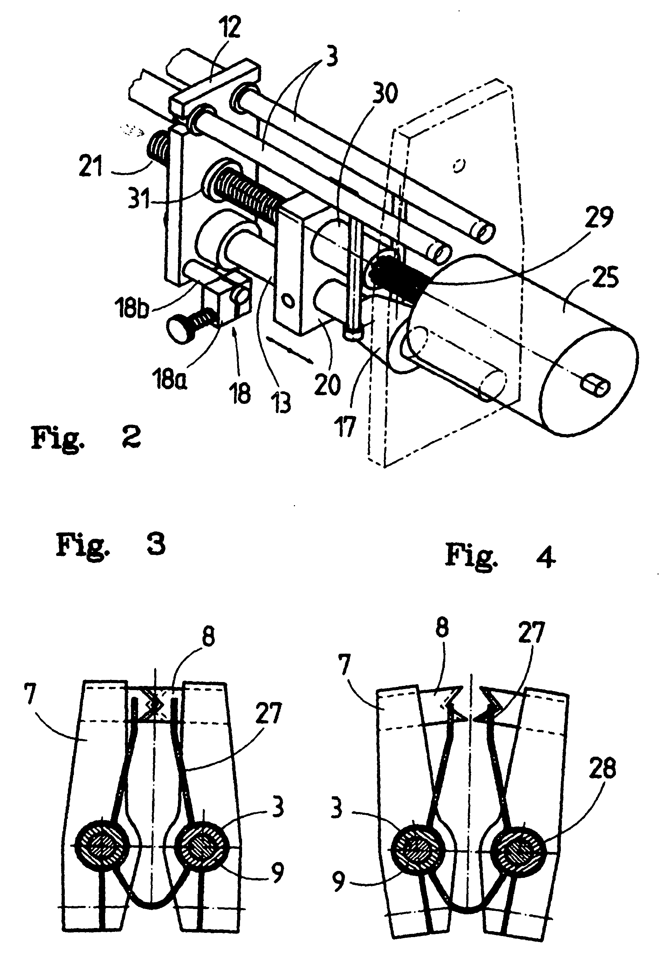

Die Vorrichtung gemäss Fig.2 geht im Detail nicht auf den Antrieb der Spannbacken ein, da diese nach an sich bekannten oder nach denselben Massnahmen wie in Fig.1 dargestellt, am vorderen freien Ende der Hauptspindel 21 angeordnet sind. Anstelle einer zweigeteilten Antriebsspindel mit zwei unterschiedlichen Gewindeabschnitten gibt es bei dieser Ausführung eine Hauptspindel 21 mit einem relativ flachen Gewinde und zwischen dem Motor 25 und diesem Gewinde 21 eine an sich bekannte Keilwellenkupplung 29 bzw. 30. Diese kann alternativ z.B. gemäss Fig.5b auch umgekehrt angeordnet sein, wobei der Motorabtriebswelle hinsichtlich des geringeren Anfahrdrehmomentes bevorzugt der geringere Aussendurchmesser der Keilwelle 29 als der grössere Aussendurchmesser der Kupplungsmuffe 30 zugeordnet ist. Abschnitt mit einer Längsnutenführung 29a.

Wie in Fig.1 ist eine Bremse 18 mit ihren Bremsbacken 18a in Axialrichtung gehäusefest verbunden. Unterschreitet die Antriebskraft zwischen Hauptspindel 21 und der dieser zugeordneten Mutter 31 in der Schubplatte 12 die Bremskraft, verbleibt die Schubplatte 12 gehäusefest. D.h. die Hauptspindel 21 schraubt sich in die Mutter 31 und nimmt derart die Schubplatte 20 und die Kegelwelle 13 analog zur Fig.1 mit.

Beim Erreichen des Anschlages 36 (Fig.5) wird die Messerzufuhr durch axiale Lagefixierung des Messerkegels 14 gestoppt. Ein Weiterschieben der Kegelwelle 13 dient nunmehr nur mehr dem Vergrössern der Spannung an den bzw. der Zustellung der Spannbacken. Auch dieser Spannkegel könnte gegebenenfalls gefedert sein. Sobald jedoch beide Kegel 14 und 17 und damit die Kegelwelle 13 sich nicht mehr weiter bewegen können, kommt es zum Überwinden der Bremskraft an der Bremsstange 18b und die Schubplatte 12 wird von der Hauptspindel 21 nach hinten gezogen und nimmt dadurch die Drehwellen 3 in die Abzugsposition der Messer, wie z.B. in Fig.1 dargestellt.

Nach dem erfolgten Abzug kommt es zu einer Drehrichtungsumkehr. Infolge der Bremskraft der Bremse 18 kommt es wieder zu einem Stillstand der Schubplatte 12. Die Schubplatte 20 wird dadurch durch das Zurückfahren der Hauptspindel 21 nach hinten geschoben, bis der Spannkegel 17 anschlägt (Position in Fig.5). Dieses Anschlagen führt zu einem axialen Festlegen der Schubplatte 20, infolgedessen die Mutter 31 und mit ihr die Schubplatte 12 und damit die geöffneten Messerhalter 7 wieder nach vorn zu den geöffneten Spannbacken 6 geschoben werden. Bei Erreichen der vordersten Position wird der Antrieb gestoppt und die Vorrichtung ist bereit für die Drehrichtungsumkehr für einen neuen Abisolierzyklus.

Wichtig ist für diesen Aufbau demzufolge die axiale Freiheit der Keilwelle 29.

Je fester die Bremse 18 angezogen ist, umso stärker steigt die Spannkraftcharakteristik (Spannkraftkurve). Andererseits ist eine Bremskrafterhöhung nachteilig beim Nach-Vor-Schieben. Dieser Aufbau ist somit nicht bevorzugt gegenüber dem Aufbau nach Fig.1. Dies kann zu geringeren Abisoliergeschwindigkeiten und mangelnder Dynamik führen.

Dies ist übrigens auch der Nachteil bekannter pneumatischer Anordnungen, wobei dort wegen besserer Dynamik und verbesserten Kräfteverhältnissen stärkere Bremskräfte nicht so störend wären.

Der Aufbau gemäss den Fig.3 und 4 erlaubt bei Abisoliermaschinen ohne Druckluftanschluss, Abisolierreste optimal vom Abisoliermesser zu entfernen. Diese einfache Lösung verhindert eine Beeinflussung der Abisolierqualität, indem die Auswerfer 27 im Schneidmoment von den Schnittstellen entfernt sind. Der Abstand der beiden Auswerferteile zueinander ist praktisch unabhängig von der Schwenkstellung der Schubrohren 9, d.h. unabhängig von der Stellung der Messer 8. Deshalb können die Auswerfer so eingerichtet werden, dass sie immer auswerfen, sobald die Messer 8 öffnen und eine gewisse Offenposition erreicht haben, beim Messerschliessen jedoch die Schneidekante nicht überragen und daher die Isolationsmanteloberfläche erst nach den Messerkanten erreichen. Zudem sind sie durch werkzeugfreie Montage zu wechseln, da sie wegen ihrer Formgebung lediglich zwischen den Schubhülsen 9 eingeklemmt sind. Diese Formgebung ist auch hinsichtlich der Federeigenschaften günstig.
Die Aufbauten der Figuren 5a - 5c zeigen das Prinzip unterschiedlicher, erfindungsgemässer Spindelausbildungen.

Fig.5a zeigt den Aufbau nach Fig.1, wobei der Aufbau des Messerkegels 14 im Detail dargestellt ist. Dieser Aufbau bringt höchste Dynamik mit kleinsten notwendigen Bremskräften und damit verbunden beste Anpassung der Spannkräfte, sowie geringsten Energiebedarf. Nebenspindel 24 und Spindelmutter 22 könnten auch verstauscht sein, was jedoch weniger Dynamik erlaubte.

Fig.5b zeigt einen abgeänderten Aufbau gemäss Fig.2 mit einer Spindel mit zwei Gewindeabschnitten 21 und 32, die gleiche Gewinderichtung jedoch unterschiedliche Steigung aufweisen. Durch das Verhältnis der Gewindesteigung wird das Verhältnis der Produkt aus Kraft mal Geschwindigkeit für einerseits der Schubplatte 20 und andererseits der Schubplatte 12 festgelegt. Es handelt sich somit um eine einfache Lösung mit Getriebewirkung. Die Keilwelle 29 und die Kupplung 30 sind hier gegenüber der Variante nach Fig.2 vertauscht, was die Dynamik etwas reduziert.

Fig.5c zeigt den besonders kurzen Aufbau nach dem Prinzip von Fig.2 bzw. Fig.5b jedoch mit einem axial verschieblichen Motor 25 an Schubstangen 33 und Schublagern 34, was die Bauform weiter verkürzt.

Alle drei Varianten zeigen eine erfindungsgemässe und bevorzugte Aufteilung der Antriebsachse 44 und Steuerachse 43 in Bezug auf die Abzugsachse 42.

Fig.6 und 7 verdeutlichen den erfindungsgemässen "Wayback" mit Hilfe der Bahnabschnitte 39 und 40 an den T-Hebeln 16, die in Fig.1 nur symbolisch als runde Hebel dargestellt sind, die in der Praxis jedoch bevorzugt blechförmig ausgebildet sind. Sie schwenken um Schwenkachsen 46 in einem Chassis 45.

### Bezugszeichenliste

- 1: Frontplatte
- 2: Motorplatte
- 3: Drehwellen
- 4: Spreizachsen
- 5: Rollen für Spannvorgang
- 6: Spannbacken
- 7: Messerhalter
- 8: (Abisolier-)Messer
- 9: Schubhülsen
- 10: Spreizachsen
- 11: Kopierrolle
- 12: Schubplatte mit Innengewinde, wirkt als Mutter
- 13: Kegelwelle
- 14: Messerkegel
- 15: Kopierrolle
- 16: T-Hebel
- 17: Spannkegel
- 18: Bremse
- 18a: Bremsbacken
- 18b: Bremsstange
- 19: Längsführung
- 20: Schubplatte
- 21: Hauptspindel, Spindelabschnitt mit normalem Gewinde
- 22: Steilgewindemutter, Spindelmutter
- 23: Kraftumsetzer, ist Kombination aus Steilgewindespindel und Mutter, die mit der Hauptspindel 21 fest verbunden ist, woraus sich auch eine vorteilhafte Untersetzung zur Motordrehzahl ergibt.
- 24: Nebenspindel Steilgewindespindel, Spindelabschnitt mit Steilgewinde
- 25: Antriebsmotor
- 26: Leiter
- 27: Auswerfer
- 28: Einstich
- 29: Keilwelle (Abschnitt an der Spindel)
- 30: Axialfreikupplung für Keilwelle
- 31: Mutter in Schubplatte 12
- 32: Spindelabschnitt (Nebenspindelabschnitt) mit geringerer Steigung aber gleicher Gewinderichtung
- 33: Motorführung
- 34: Gleitlager
- 35: Motorachse
- 36: Stellschraube, Anschlag für Durchmesser (Messerschnitt tiefe)
- 37: Kegelschubstift
- 38: Druckfeder
- 39: erster Bahnabschnitt
- 40: zweiter Bahnabschnitt für Wayback
- 41: Zugfeder
- 42: Abzugsachse
- 43: Steuermechanismus, symbolisch als Steuerachse oder Steuerebene dargestellt, ist jedoch im Rahmen der Erfindung auf die dargestellte, geradlinige Form nicht eingeschränkt.
- 44: Antriebsachse
- 45: Chassis
- 46: Schwenkachse für T-Hebel 16

## Patentansprüche

1. Vorrichtung zum Abisolieren von elektrischen oder lichtoptischen Leitern (26) entlang einer Abzugsachse (42), bzw. Abzugsebene, mit wenigstens je einem Einschneide-, Abzugs- und Steuermechanismus mit wenigstens einem Steuerelement (14,17) am Steuermechanismus (43) und einem Antrieb mit einer Antriebsachse (44) bzw. Antriebsebene, wobei der Steuermechanismus (43) von der Antriebsachse (44) bzw. Antriebsebene getrennt angeordnet ist, und wobei die Antriebsachse (44) bzw. Antriebsebene parallel zur Abzugsachse (42) bzw. Abzugsebene liegt. (Fig.1,2,5,6) **dadurch gekennzeichnet, dass** ein einziger Antriebsmotor (25) vorhanden ist, dessen Antriebskraft im Betriebszustand sowohl auf den Abzug als auch auf den Steuermechanismus wirkt, und dass die Antriebsachse (44), bzw. Antriebsebene zwischen der Abzugsachse (42), bzw. Abzugsebene und dem Steuermechanismus (43) liegt.

2. Vorrichtung nach Anspruch 1, **dadurch gekennzeichnet, dass** der Abstand zwischen Antriebsachse (44) und Abzugsachse (42) bzw. Abzugsebene kleiner ist, als derjenige zwischen Antriebsachse (44) bzw. Antriebsebene und Steuermechanismus (43), sodass sich allfällige Kippmomente zwischen diesen Achsen bzw. Ebenen symmetrisch - jedoch mit entgegengesetzter Momentrichtung - um die Antriebsachse (44) bzw. Antriebsebene aufbauen, so dass sich diese Kippmomente beim Abziehen gegenseitig reduzieren.

3. Vorrichtung zum Abisolieren von elektrischen oder licht-optischen Leitern (26) mit wenigstens einem Spannbacken (6) in einer Spannvorrichtung und wenigstens einem Messer (8) zum Einschneiden einer Isolation um den Leiter (26) sowie mit einem einzigen Antrieb für Messer- und Spannbacken (6,8), nach Anspruch 1 oder 2, **dadurch gekennzeichnet, dass** der Antrieb als Rotationsantrieb - vorzugsweise als Elektromotor (25) - ausgebildet ist und eine Spindelvorrichtung (21,22,23,24;30,31;32), die sowohl das Messer (8) als auch den Spannbacken (6) antreibt.

4. Vorrichtung nach Anspruch 3 mit einem Chassis (45), **dadurch gekennzeichnet, dass** zwischen dem Motor (25) und der Spindelvorrichtung (21,30,31) eine Kupplung, insbesondere eine Keilwelle (29) angeordnet ist, so dass die Spindelvorrichtung (21,30,31) relativ zum Motor (25)axial verschieblich ist,
oder dass
Spindelvorrichtung (21,32) und Motor (25) miteinander axial fest verbunden sind und der Motor gegenüber dem Chassis (45) axial verschieblich angeordnet ist. (2,5b,c)

5. Vorrichtung nach Anspruch 3 oder 4, **dadurch gekennzeichnet, dass** die eine Spindel vorgesehen ist, die zwei Gewindeabschnitte (21,24;32) mit unterschiedlichen Gewindesteigungen aufweist, oder dass eine Hauptspindel (21) und eine Nebenspindel (24) vorgesehen sind, die unterschiedliche Gewindesteigungen aufweisen. (5)

6. Vorrichtung nach Anspruch 3 oder 5, **dadurch gekennzeichnet, dass** die Spindel (21,24;32) vom Motor über eine Spindelmutter (22) antreibbar ist, die entweder mit der Hauptspindel (21) oder mit der Motorabtriebswelle fest verbunden ist, wobei die Nebenspindel (24) entweder mit der Motorabtriebswelle oder mit der Hauptspindel (21) fest verbunden sind.

7. Vorrichtung nach einem der Ansprüche 3 bis 6, **dadurch gekennzeichnet, dass** eine Spindel mit zwei Gewindeabschnitten (21,32) oder zwei getrennte Spindeln (21,24) mit jeweils gegenläufigen Gewinderichtungen mit gleicher Gewindesteigung, oder vorzugsweise jeweils mit gegenläufiger Gewinderichtung und unterschiedlichen Gewindesteigungen ausgebildet sind. (Fig.1,5a)

8. Vorrichtung nach einem der vorhergehenden Ansprüche, **dadurch gekennzeichnet, dass** der Motor (25) parallel und insbesondere fluchtend zur Spindelvorrichtung (21,22,23,24;30,31;32) angeordnet ist. (Fig.1,2,5)

9. Vorrichtung nach einem der vorhergehenden Ansprüche, **dadurch gekennzeichnet, dass** wenigstens eine mit der Spindelvorrichtung (21,22,23,24;30,31;32) kooperierende Mutter (31) als reibungsvermindernde Mutter, z.B. Kugelumlaufmutter, ausgebildet ist, die mit einer Hauptspindel (21) bzw. mit einem Spindelabschnitt (21) kooperiert, und/oder dass wenigstens eine Mutter (22) aus besonders gleitfähigem Material (z.B. Kunststoff) ausgebildet ist.

10. Vorrichtung nach einem der vorhergehenden Ansprüche, **dadurch gekennzeichnet, dass** der Motor (25) als eisenloser Gleichstrommotor ausgebildet ist, wobei vorzugsweise Positionssensoren die jeweilige Drehrichtungsumkehr triggern.

11. Vorrichtung mit wenigstens einem in Bezug auf die Leiterachse radial und axial antreibbaren Messerhalter (7) an wenigstens einer Schubhülse (9) nach einem der vorhergehenden Ansprüche, **dadurch gekennzeichnet, dass** in der Nähe des Messerhalters (7) wenigstens ein federnder Auswerfer (27) für Isolationsreste vorgesehen ist, der zwar in Bezug auf das Messer (8) axial unverschieblich, in Schwenkrichtung des Messers (8) zum Messer 8 jedoch von der Messerbewegung abgekoppelt ist.

12. Vorrichtung nach Anspruch 11, mit wenigstens zwei Messerhaltern (7), **dadurch gekennzeichnet, dass** beide Auswerfer (27) federnd miteinander verbunden sind, so dass sie ohne weitere Befestigungsmittel, insbesondere an den Schubhülsen (9) verrastbar sind.

13. Vorrichtung mit einer Keilsteuerung (9,10,11,14,15,16) für Abisoliermesser (8) nach einem der vorhergehenden Ansprüche, **dadurch gekennzeichnet, dass** wenigstens ein Teil der Keilsteuerung (9,10,11,14,15,16) eine mehrstufige Gleit- oder Rollbahn (39,40) aufweist, wobei diese Stufen in Abhängigkeit von der Axialbewegung der Messer nacheinander abfahrbar sind, so dass die Messer im Zuge des Abziehens automatisch geringfügig öffenbar sind, was einem Wayback entspricht.

14. Vorrichtung nach einem der vorhergehenden Ansprüche, **dadurch gekennzeichnet, dass** dem Motor eine Steuerelektronik zugeordnet ist, die das automatische Abfahren von mehreren Abisolationszyklen hintereinander ermöglicht, wobei vorzugsweise wenigstens ein zusätzlicher Stellantrieb vorgesehen ist, der wenigstens einen Anschlag gemäss einer programmmässigen Voreinstellung verstellt, so dass im Zuge der Abisolationszyklen wählbare unterschiedliche Absiolationsresultate erzielbar sind.

## Claims

1. Device for stripping electrical or fibre-optic conductors (26) along a stripping axis (42) or stripping plane, comprising at least one each of an incision, stripping and control mechanism having at least one control element (14, 17) on the control mechanism (43) and a drive having a drive axis (44) or drive plane, the control mechanism (43) being arranged separately from the drive axis (44) or drive plane, and the drive axis (44) or drive plane being parallel to the stripping axis (42) or stripping plane (Fig. 1, 2, 5, 6), **characterized in that** a single drive motor (25) is present, the driving force of which in the operating state acts both on the stripping and on the control mechanism, and **in that** the drive axis (44) or drive plane is located between the stripping axis (42) or stripping plane and the control mechanism (43).

2. Device according to Claim 1, **characterized in that** the distance between drive axis (44) and stripping axis (42) or stripping plane is less than that between drive axis (44) or drive plane and control mechanism (43), so that any tilting moments between these axes or planes are established symmetrically - but with opposite moment direction - about the drive axis (44) or drive plane, so that these tilting moments are mutually reduced on stripping. (Fig. 1, 2, 5 & 6)

3. Device for stripping electrical or fibre-optic conductors (26), comprising at least one clamping jaw (6) in a clamping device and at least one knife (8) for cutting into an insulation around the conductor (26) and comprising a single drive for knife and clamping jaws (6, 8), according to Claim 1 or 2, **characterized in that** the drive is in the form of a rotary drive - preferably in the form of an electric motor (25) - and a spindle device (21, 22, 23, 24; 30, 31; 32) which drives both the knife (8) and the clamping jaw (6).

4. Device according to Claim 3, comprising a chassis (45), **characterized in that** a coupling, in particular a spline shaft (29), is arranged between the motor (25) and the spindle device (21, 30, 31), so that the spindle device (21, 30, 31) is axially displaceable relative to the motor (25), or **in that** spindle device (21, 32) and motor (25) are connected firmly to one another axially and the motor is arranged axially displaceably relative to the chassis (45). (2, 5b,c)

5. Device according to Claim 3 or 4, **characterized in that** one spindle is provided which has two thread sections (21, 24; 32) with different thread pitches, or **in that** a main spindle (21) and a secondary spindle (24) are provided which have different thread pitches. (5)

6. Device according to Claim 3 or 5, **characterized in that** the spindle (21, 24; 32) can be driven by the motor via a spindle nut (22) which is firmly connected either to the main spindle (21) or to the motor output shaft, the secondary spindle (24) being firmly connected either to the motor output shaft or to the main spindle (21).

7. Device according to any of Claims 3 to 6, **characterized in that** a spindle having two thread sections (21, 22) or two separate spindles (21, 24) each having opposite thread directions with identical thread pitch, or preferably each having opposite thread directions and different thread pitches are formed. (Fig. 1, 5a)

8. Device according to any of the preceding Claims, **characterized in that** the motor (25) is arranged parallel to and in particular aligned with the spindle device (21, 22, 23, 24; 30, 31; 32). (Fig. 1, 2, 5)

9. Device according to any of the preceding Claims, **characterized in that** at least one nut (31) cooperating with the spindle device (21, 22, 23, 24; 30, 31; 32) is in the form of a friction-reducing nut, e.g. ballscrew nut, which cooperates with a main spindle (21) or with a spindle section (21) and/or **in that** at least one nut (22) is formed from particularly low-friction material (e.g. a plastic).

10. Device according to any of the preceding Claims, **characterized in that** the motor (25) is in the form of a coreless direct current motor, preferably position sensors triggering the respective reversal of direction of rotation.

11. Device comprising at least one knife holder (7) - which can be driven radially and axially with respect to the conductor axis - on at least one thrust sleeve (9), according to any of the preceding Claims, **characterized in that** at least one spring-loaded ejector (27) for insulation residues is provided in the vicinity of the knife holder (7), which ejector is axially nondisplaceable relative to the knife (8) but can be uncoupled from the knife movement in the pivot direction of the knife (8) toward the knife 8.

12. Device according to Claim 11, comprising at least two knife holders (7), **characterized in that** both ejectors (27) are connected to one another under spring load, so that they can be locked without further fastening means, in particular to the thrust sleeves (9).

13. Stripping device comprising a wedge control (9, 10, 11, 14, 15, 16) for stripping knives (8), according to any of the preceding Claims, **characterized in that** at least a part of the wedge control (9, 10, 11, 14, 15, 16) has a multistep sliding or roller path (39, 40), these steps being capable of being travelled over in succession depending on the axial movement of the knives, so that the knives can automatically be opened slightly in the course of stripping, which corresponds to a wayback.

14. Stripping device according to any of the preceding Claims, **characterized in that** control electronics which permit automatic execution of a plurality of stripping cycles in succession are coordinated with the motor, preferably at least one additional actuator being provided which adjusts at least one stop according to a programmed presetting so that selectable different stripping results are achievable in the course of the stripping cycles.

## Revendications

1. Dispositif permettant de dénuder des conducteurs (26) électriques ou photo-optiques le long d'un axe d'enlèvement (42) ou d'un plan d'enlèvement, comprenant au moins un mécanisme respectif d'incision, d'enlèvement et de commande avec un élément de commande (14, 17) au mécanisme de commande (43), et un dispositif d'entraînement ayant un axe d'entraînement (44) ou un plan d'entraînement, ledit mécanisme de commande (43) étant disposé séparément dudit axe d'entraînement (44) ou dudit plan d'entraînement, et dans lequel ledit axe d'entraînement (44) ou ledit plan d'entraînement est parallèle à l'axe d'enlèvement (42) ou au plan d'enlèvement. (Figures 1,2,5,6) **caractérisé en ce qu'**il existe un seul moteur d'entraînement (25), dont la force d'entraînement, en état de marche, agit non seulement au mécanisme d'enlèvement, mais encore au mécanisme de commande, et que l'axe d'entraînement (44) ou le plan d'entraînement est disposé entre l'axe d'enlèvement (42) ou le plan d'enlèvement et le mécanisme de commande (43).

2. Dispositif selon la revendication 1, **caractérisé en ce que** l'espacement entre l'axe d'entraînement (44) et l'axe d'enlèvement (42) ou le plan d'enlèvement est plus petit que celui-ci entre l'axe d'entraînement (44) ou le plan d'entraînement et le mécanisme de commande (43), de manière que des moments de renversement éventuels entre ces axes ou plans se développent symétriquement autour l'axe d'entraînement (44) ou le plan d'entraînement, mais avec des directions de moment opposées, de façon que ces moments de renversement se réduisent l'un à l'autre lors de l'enlèvement. (Figures 1, 2, 5 & 6)

3. Dispositif permettant de dénuder des conducteurs (26) électriques ou photo-optiques comprenant au moins une mâchoire de serrage (6) dans un dispositif de serrage, et au moins une lame (8) pour inciser dans une isolation autour le conducteur (26) ainsi qu'un seul dispositif d'entraînement pour les mâchoires de lame et de serrage (6, 8) selon la revendication 1 ou 2, **caractérisé en ce que** le dispositif d'entraînement est formé comme dispositif rotatif d'entraînement, préférablement comme moteur électrique (25), et un dispositif à broche (21, 22, 23, 24; 30, 31; 32), qui entraîne non seulement la lame (8) mais encore la mâchoire de serrage (6).

4. Dispositif selon la revendication 3, comprenant un châssis, **caractérisé en ce qu'**un dispositif d'accouplement, particulièrement un arbre cannelé (29), est disposé entre le moteur (25) et le dispositif à broche (21, 30, 31), de manière que le dispositif à broche (21, 30, 31) est axialement déplaçable par rapport au moteur (25),
ou que
le dispositif à broche (21, 32) et le moteur (25) sont axialement solidement reliés l'un à l'autre, et le moteur est disposé d'une manière axialement déplaçable par rapport au châssis (45). (2, 5b,c)

5. Dispositif selon la revendication 3 ou 4, **caractérisé en ce qu'**une broche est prévue, qui présente deux parties de filet (21, 24; 32) avec des pas de vis différents, ou qu'une broche principal (21) et une broche auxiliaire (24) sont prévues, qui comprennent des pas de vis différents. (5)

6. Dispositif selon la revendication 3 ou 5, **caractérisé en ce que** la broche (21, 24; 32) peut être entraînée par le moteur au moyens d'un écrou de broche (22), qui est solidement reliée soit à la broche principale (21), soit à l'arbre de sortie du moteur, la broche auxiliaire (24) étant solidement reliée soit à l'arbre de sortie du moteur, soit à la broche principale (21).

7. Dispositif selon une quelconque des revendications 3 à 6, **caractérisé en ce qu'**une broche est formée avec deux parties de filet (21, 32), ou deux broches séparées (21, 24) sont formées, qui comprennent respectivement des directions de filet opposées et le même pas de vis, ou de préférence respectivement des directions de filet opposées et des pas de vis différents. (Figures 1, 5a)

8. Dispositif selon une quelconque des revendications précédentes, **caractérisé en ce que** le moteur (25) est disposé parallèlement, et en particulier aligné, au dispositif à broche (21, 22, 23, 24; 30, 31; 32). (Figures 1, 2, 5)

9. Dispositif selon une quelconque des revendications précédentes, **caractérisé en ce qu'**au moins un écrou (31) coopérant avec le dispositif à broche (21, 22, 23, 24; 30, 31; 32) est formé comme écrou antifrictionneur, par exemple comme écrou à recirculation de billes, qui coopère avec une broche principale (21) ou avec une partie de broche (21), et/ou qu'au moins un écrou (22) est formé d'un matériau particulièrement glissant (par exemple d'une matière artificielle).

10. Dispositif selon une quelconque des revendications précédentes, **caractérisé en ce que** le moteur (25) est formé comme moteur à noyau d'air à courant continu, des capteurs de position déclenchant de préférence le renversement de la direction rotative respective.

11. Dispositif comprenant au moins un guide-lame (7), qui peut être entraîné en directions radiale et axiale par rapport à l'axe du conducteur et se trouve à au moins une douille de poussé (9) selon une quelconque des revendications précédentes, **caractérisé en ce que** près du guide-lame (7) au moins un éjecteur élastique (27) pour des résidus d'isolation est prévu, qui, en effet, est axialement déplaçable par rapport à la lame (8), mais est découplé du mouvement de la lame (8) en direction de pivotement de la lame (8) à la lame 8.

12. Dispositif selon la revendication 11, comprenant au moins deux guide-lames (7), **caractérisé en ce que** les deux éjecteurs (27) sont élastiquement reliés l'un à l'autre de manière qu'ils se peuvent enclencher, particulièrement aux douilles de poussée (9), sans des moyens d'attache ultérieurs.

13. Dispositif de dénudation comprenant une commande à coin (9, 10, 11, 14, 15, 16) pour des lames de dénudation (8) selon une quelconque des revendications précédentes, **caractérisé en ce qu'**au moins une partie de la commande à coin (9, 10, 11, 14, 15, 16) comprend une surface de glissement ou de roulement (39, 40) à étages multiples, lesdits étages pouvant être parcourus l'un après l'autre en fonction du mouvement axial des lames, de manière que les lames peuvent être ouverts automatiquement d'une façon peu considérable pendant l'enlèvement, ce qui correspond à un Wayback.

14. Dispositif selon une quelconque des revendications précédentes, **caractérisé en ce qu'**une électronique est associée au moteur, qui rend possible à parcourir automatiquement plusieurs cycles de dénudations l'un après l'autre, au moins un servomoteur additionnel étant prévu de préférence, qui ajuste au moins un arrêt selon un préréglage programmé, de façon que des résultats différents de dénudation sélectionnés peuvent être obtenus au cours des cycles de dénudation.
